# EUROPEAN PATENT APPLICATION

(11) **EP 1 816 412 A1**
(43) Date of publication of application: **08.08.2007**
(21) Application number: 04727189.5
(22) Date of filing: 14.04.2004
(51) Int. Cl.: F24J 2/42, F24J 2/15, F24J 2/18

(54) **METHOD FOR SOLAR ENERGY THERMAL CONVERSION**

(71) Applicant: CLOSED JOINT-STOCK COMPANY "MGK" "INTERGELIOECOGALAXY", Moscow, 107996 (RU)
(72) Inventor: CHABANOV, Alim Ivanovich, Alushta, 98517, AR Krym (UA); SYCHEV, Michail Parfenovich, Minsk, 220002 (BY); EROCHOV, Nikolai Michailovich, Minsk, 220004 (BY); SCHUKIN, Georgii Lukich, Minsk, 220017 (BY); SIDORENKO, Jurii Petrovich, Minsk, 220071 (BY); FILIPENKO, Evgenii Semenovich, 95000, Simferopol, AR Krym (UA); BAZHENOV, Andrei Nikolaevich, 95000, Simferopol, AR Krym (UA); CHABANOV, Vladislav Alimovich, Moscow, 119517 (RU); SMARZH, Ivan Iljich, Simferopol, 95011, AR Krym (UA); GORODOV, Michail Ivanovich, Simferopol, 95034, AR Krym (UA); MATASOV, Rev Alexandrovich, Cherkasy, 18024 (UA); MARCHENKO, Vladimir Romanovich, Kiev, 03000 (UA); ZHIGAJLO, Viktor Nikiforovich, Moscow, 117418 (RU); VORONKOV, Alexei Alexeevich, Moscow, 117042 (RU); SEVASTJANOV, Vladimir Petrovich, Novosibirsk, 630099 (RU); CHABANOV, Dmitrii Alexeevich, Novosibirsk, 630099 (RU); CHEPASOV, Alexandr Alexandrovich, Novosibirsk, 630099 (RU); SOBOLEV, Valerian Markovich, Moskovskaya obl., 141061 (RU); SOLOVJEV, Alexandr Alexeevich, Moscow, 119899 (RU)
(74) Representative: Turini, Laura
(86) International application number: PCT/BY2004/000012
(87) International publication number: WO 2005/100876

(57) **Abstract**

The invention concerns to sphere of helio-energy producing connected with transformation the energy of solar rays to thermal energy.

The offered way of thermo-transformation of a solar energy is based on increase of thermo-insulation characteristics and simultaneously transparency of a surface closed helio-absorbent chamber in which carry out concentration of flows of solar rays, their transformation to thermal energy at the temperature considerably exceeding in set variants a boiling point of water, and accumulation of thermal energy with the raised temperature potential, in particular, not less than 150 degrees of Celsius.

Realization of a way carries out by means of consecutive connection of concentrators of solar rays. One of them carries out by creation of system of the local concentrators which have been built-in in a thermo-insulating lightproof material, covering the helio-absorbent chamber. The built-in concentrators and conductors of solar rays represent, mainly, the hollow truncated pyramids extended at length which sides are covered by a ray-reflecting material, and the bases are closed by a transparent thermo-insulating material. Thus the big bases of these pyramids - optical paths are located on an external surface of helio-absorbent chamber and as transparent rectangulars are located by the parties, practically, closely to each other, and the smaller bases are placed above her helio-thermo-transforming surfaces and have the smaller area of cross-section, than the external bases.

The second concentrator of solar rays is external. Such concentrators have, roughly, the form of the truncated pyramids which sides also are executed with application of a ray-reflecting material, and they are fixed by the smaller bases - inlet apertures near to an irradiated external surface of helio-absorbent chamber while they are inverted by the big bases - outlet apertures towards to the solar rays acting from surrounding space. In addition to this, the third level of solar ray rating of helio-absorbent chamber is created due to creation in surrounding space, on various distances from last, a field external ray-reflecting surfaces from which the reflected solar rays go to entrance apertures of external concentrators of solar rays in pyramid forms, creating additional rating in it of ray energy.

Configurations of accommodation helio-absorbent (helio-thermo-transforming) and thermo-accumulating materials are resulted as applied for volumetric chambers. The last can be carried out as well flat, including the small thickness, placed in horizontal, vertical or inclined positions. In this case the helio-absorbent chamber incorporates heat-conducting thermo-insulated channels with separately stated thermo-accumulating constructions, and as heat-carriers gaseous or liquid environments are applied.

The offered way of thermo-transformation of a solar energy, allowing to carry out multicascade rating a solar energy in the helio-absorbent chamber and to create its rather high thermo-insulation solves a problem of priority creation high-economic and non-polluting helio-boilers, helio-thermo power plants and household, including mobile, helio-energy installations which technical and economic recoupment does not exceed 3 years.

## Description

### Technical Field

The present invention concerns to sphere of solar power producing.

### Background art

Technical decisions are known in the field of transformation of a solar energy to thermal energy of the heated up water, the fused salts with low temperature of fusion and kinetic energy of moving airflows.

Ways and the technical variants of their realization directed on reception of electric energy by means of heating of dark surfaces by solar rays with the subsequent transformation of thermal energy in a high-speed airflow which results in rotation of a wind-turbo-electric unit, developing electric energy are known also.

These technical decisions supplement each other with useful technological receptions, means and adaptations, however do not open ways of overcoming of techniques of a disputed situation existing till now in this area. It will consist in the following. As intensity of the sunlight which is taking place in the closed thermal chamber for thermal transformation, the is more, than above transparency of last there is a proved tendency to increase in the area of transparent surfaces of the thermal chamber, however, thus energy dissipation, including, convective-conductive and ray losses of thermal energy from within, and also absorption and reflection of solar beams by the most transparent surface, accordingly, grows.

As a result of such situation in solar collectors, with transparent and thermo insulating coverings, especially in industrial-scale plants, it is not possible to receive steadily temperature of a heated up working-medium, for example, waters, are higher 70° as the size of thermal losses and decrease in efficiency of process stop its growth, and also lead to fast decrease in temperature with reduction of intensity of solar radiation. Exception is made with only separate research designs which cannot be used widely in industry.

Detailed generalization and the analysis of results in this area of techniques with an estimation of the achieved level and prospects are stated in D.Mak-Vejg's monography «Application of a solar energy» M, Energoizdat, 1981. (translation from G.A.Guhman and S.I.Smirnova's English language).

It is known also a helio-energy way of manufacture of the electric power, based on use of the environment (reservoirs) heated up by a sunlight for heating and transformation to steam a liquid as working-medium with low temperature of boiling and evaporation, with the subsequent submission of steam of a working-medium in the steam-turbine unit, including indirect participation of air as second working-medium in process of energy transformation [see certificate of authorship of the USSR 1495492 «Oceanic power installation» F03G7/04; F01K25/00, publ. 23.07.89].

The given way allows to receive thermal energy with temperature necessary for consumers only through thermal transformation of developed electric energy. Application of special liquids, for example ethers, freon, strongly limits, however, area of use of the given way, therefore it is auxiliary.

The way of transformation of energy of the solar rays, based on use of a principle of absorption of solar rays by a dark surface and transfer of received thermal energy to the air environment [see certificate of authorship of the USSR 1416745 «Power installation» F03 9/00, publ. 15.08.88; the application of Germany 3312977 «Solar wind unit» F03 9/00, publ. in 1984; the application of France 22698682 «The Collector of a solar energy of the raised efficiency» F24J2/16, 2/20,2/48, publ. 03.06.94; certificate of authorship of the USSR 1625999 F24J2/42 «The Solar engine», publ. 07.02.91]. The technical decisions resulted in the specified patent materials, and also additional, known to authors of the present prospective invention from other sources of the scientific and technical information, provide use of similar primary process of transformation of a solar energy by means of receipt of solar rays on dark helio-absorbent surfaces through transparent, thermo-insulating coverings. With the help of the last, together with helio-absorbent surfaces, form the closed spaces, finally, each of them - as the thermal chamber where make heating water and-or air with the purpose of their further use in a warm or hot kind. Prominent feature for all these technical decisions is that the transparent covering of thermal chambers is carried out with the help of application of a glass, in one - two lines glass or polymeric films which do not provide enough qualitative of thermo insulation. The increase in thickness and quantity of numbers a transparent thermo-insulating material leads to increase of losses of beam energy on an input in the thermal chamber by means of corresponding increase in quantity of the reflected and absorbed solar energy. For this reason it is not reached significant restrictions of power losses, and the potential opportunity of increase in temperature of a working body up to the sizes reaching and exceeding temperature of boiling of water with the purpose of reception technological pair, and also comprehensible values of speed
and his efficiency, is not realized. Therefore till now municipal means of a heat supply which could exclude ecologically destructive burning natural energy-raw material (gas, oil, coal) are not created yet competitive industrial helio-systems on manufacture of thermal and electric energy, and also. It proceeding efforts in search of the sanction of the above described disputed situation in helio-energy producing speak.

One of directions in this search is development of variants of application of helio-concentrators which would allow rather inexpensive means to increase receipt of solar rays in thermal chambers, at preservation of the fixed sizes of helio-absorbent surfaces. Most to the present prospective invention the technical decision connected to application of helio-concentrating surfaces, established on mobile rail platforms which trajectory of movement within light day covers in a corresponding part perimeter large transparent thermo insulated spaces [see certificate of authorship of the USSR 1449703 «Aerodynamic helio-power station» F03G7/02, F24J2/42, publ. 07.01.89]. In this technical decision the solar rays perceived by helio-concentrator on significant irradiated spaces, go through a transparent covering for heating the air environment and a pipe header with the purpose of the subsequent development of the electric power, with use for this purpose as a working-medium of heated up air, and also - waters. Advantage of the given technical decision consists not only in additional power saturation of the closed space, that in itself has great value, but also that helio-concentrator is executed as ray-reflector, not demanding precision focusing with corresponding high-dynamic and the precision regulation, influencing on significant volumes and territories of space. Besides his advantage consists that ray-reflecting (ray-concentrating) surfaces are established on mobile means with which help it can be covered from a strong wind in a corresponding place, and it allows to carry out such helio-concentrator in light, sand cheap designs. Such application of helio-concentrators, in the facilitated designs, promotes creation of economic conditions for stage-by-stage maintenance of competitiveness helio-energy producing. In this sense known typical helio-concentrators concede to a variant on the considered prototype as in the first the resulted cost of one square meter of helio-concentraiting surface is within the limits of 200-250 US dollars, and in the second case makes size, in 2-3 times smaller which in special designs has prospect of the further repeated decrease.

However, in the stated technical decision, according to the named prototype, basically, the specified basic disputed situation nevertheless is not solved: application and perfection separately worth simplified and reduced the price of ray-concentrators- ray-reflectors does not reduce size of heat loses through transparent surfaces of thermal chambers - closed helio-absorbent cavities which size remains big. Rates of growth of thermal losses sharply increase with rise in temperature in the internal environment of the last.

A problem of the present technical decision, according to the prospective invention, is creation of such way and a complex of techniques of thermo-transformation of a solar energy at which realization it would be possible to liquidate essentially becoming typical specified structurally - a technological limit in restriction of irrevocable thermal losses from the closed transparent thermal chamber in surrounding space at preservation of quantity of a solar energy acting in it is, moreover - to strengthen a thermo insulation its internal environment and to reach restriction of thermal losses up to anyone beforehand set, economically expedient level, essentially to raise efficiency and economic efficiency of process of helio-transformation.

### Disclosure of invention

Technical result of the conceptual decision in the present prospective invention is creation of solar intensified hothouse complexes - helio-boilers which allow to make thermal energy through thermo-transformation of solar rays with specific cost, considerably lower, than it is typical of modern thermal power stations and the boiler-houses working on natural gas, and are a power basis of creation highly effective helio-wind power stations.

Particular technical results of the offered way of thermo transformation of a solar energy are decrease in capital expenses at construction of thermal power stations and boiler-houses, creation of complexes household and mobile helio-energy installations, including for hot processing foodstuff as external, traditional for many regions, cooker or furnaces in which it is possible to prepare food, in particular, to bake bread, even in conditions of severe Russian winter, and also to be reserved in them by thermal energy for the night period or even for some day.

The specified technical result at realization of the invention is reached by that concerning known, according to the named prototype, a way of thermo transformation of a solar energy, based on: increasing of thermo insulating characteristics and transparency of surfaces closed helio-absorbent chamber, which is bounded from different directions by a thermo-insulating material, in particular, as the bottom, walls and a ceiling, and the last carry out, mainly, from transparent materials, the area of a surface, design data, accommodation and which technological processings define so that penetrating through them in the helio-absorbent chamber the light stream would have probably the big capacity, as much as possible heating up placed in it technological helio-thermo-transforming materials and providing, simultaneously with it, the greatest possible restriction of losses of energy from cavity of helio-absorbent chamber, including return infra-red radiations, and losses of light energy in the transparent materials borrowing on the area the most part of surfaces of the specified walls and ceilings and considerably lowering their thermo-insulating characteristic;
application in the helio-absorbent chamber of technological materials with the raised values of factor of absorption of a sunlight, rather high values of a specific thermal capacity and the thermo-accumulating properties providing accumulation by thermal energy in the helio-absorbent chamber for the long period, determined technical requirements of consumers of the energy and statistical characteristics of weather and seasonal conditions, are available differences that separate internal helio-absorbent environment of the chamber from an external environment on the part of internal surfaces of its walls and-or ceilings mainly a lightproof thermo-insulating material, thickness, a which structure and thermo insulating characteristics set on conditions of minimization of resulting thermal losses from helio-absorbent chamber while streams of a sunlight from surrounding space specially direct inside helio-absorbent chamber, at least, through two consistently located concentrator and a conductor of solar rays, first of which carry out as the external concentrator with the help of ray-reflecting surfaces, available in surrounding space of the helio-absorbent chamber so that the solar rays reflected by them acted on irradiated sites of last for what focus them as the method of truncated hollow pyramid which sides supply with a ray-reflecting material and create by means of them peripheral borders of its smaller basis located near to an external surface of the helio-absorbent chamber and being a inlet aperture of the external concentrator of solar rays, and the greater basis being his outlet aperture which direct towards to the direct and reflected solar rays taking place through him from surrounding space and acting, with the help of ray-reflecting surfaces of his sides, as the concentrated stream on corresponding sites of surfaces of helio-absorbent chamber, and the area of an inlet aperture of the external concentrator of solar rays exceeds the area of his outlet aperture, and as the second apply the built-in concentrator and a conductor of solar rays which form by means of creation of system built-in on all thickness a lightproof thermo-insulating material covering the helio-absorbent chamber, volumetric geometrical forms, for example, as the hollow truncated tetrahedral pyramids and-or cones which internal surfaces cover with a ray-reflecting material, and the free bases close a thin transparent thermo-insulating material due to what the given geometrical forms containing certain volume of the gas thermo-insulating environment, allow to keep high thermo-insulating parameters of helio-absorbent chamber and simultaneously to give to it high solar-ray and thermal energy-saturation, thus the external concentrator of solar rays supply with the additional ray-reflecting surfaces placed on various distances in an environment in fixed and-or adjustable in function of time and weather conditions positions concerning a surface of ground, including horizontal, inclined and vertical positions, and fixed, for example, by means of in addition established bearings, rope designs, available, in particular, as prestressed rotary designs in specially executed trenches which in part combine also functions of hothouse cultivation of vegetables and berries, and-or adaptations with elevating tanks and inflatable forms, nearby structures, improvised means and accordingly focused raised sites of a relief of a terrestrial surface with which help direct streams of the reflected solar rays under optimum corners in a direction of an inlet aperture of the external concentrator of solar rays, including during winter time when intensity of solar radiation at high breadths is characterized concerning low size, - streams of the solar rays reflected by a snow cover from the big surrounding territories, thus the built-in concentrators and conductors of solar rays place on an external surface of a lightproof thermo-insulating material of their helio-absorbent chamber the big bases on the area, choosing so that the nearby parties of the adjacent bases have defended their geometrical parameters and a relative positioning from each other on the minimal distances determined by technological conditions of realization and stability of a design in operation while on an internal surface of a thermo insulating material of helio-absorbent chambers have the smaller bases of the built-in concentrators and conductors of solar rays so that distances between the nearby smaller bases, in particular, exceeded length of the parties of their cross-section section due to what conditions for formation of the minimal section of the concentrated streams of solar rays and additional decrease in losses of energy of a sunlight from helio-absorbent chamber are created, and helio-absorbent chambers carry out volumetric and-or flat, and built-in in a lightproof thermo-insulation concentrators and conductors of solar rays, - mainly, as the pyramids equipotential and extended in length.

Such technical decision allows to remove economically effectively a traditional structurally-technological limit of restriction of losses of heat from closed internal helio-absorbent environment of the chamber at increase in the area of its transparent surface and to provide not only preservation of quantity of a solar energy acting in it at escalating its thermo insulating parameters, but also his increase due to an additional, "compulsory" direction of solar rays inside helio-absorbent chamber from surrounding space, that is by its ray-power rating, by means of application attached to it or the external concentrator of solar rays located by a line. Last is executed, mainly, from four sides forming the approached form of the truncated hollow pyramid. Each of its four sides, mainly, contains the surfaces procovered with a ray reflecting material, for example the aluminium foil protected from atmospheric influence by a thin layer of a transparent material. Now cost 1sq. m. of a transparent material with a unilateral aluminium (mirror) covering is within the limits of 0,3-0,5 US dollars. In case of the organization of large-scale industrial production of such smooth surfaces with a protective film cost them will not exceed 0,2-0,3 US dollars for 1 sq. m. at the raised quality.

At an external surface of helio-absorbent chamber or not far from it these sides approach among themselves, forming similarity of the smaller basis of pyramidal figure as a outlet aperture of the external concentrator of solar rats. In the opposite party from an external surface of a helio-absorbent chamber side diverge among themselves, forming in the end similarity of the bigger basis of pyramidal figure as an inlet aperture of the external concentrator of solar rays. The stream of solar rays which is included in last, being reflected from smooth surfaces of sides, leaves through his smaller basis with the greater specific energy.

Pyramidal determination of the form of the external concentrator of solar rays proceeds from basic, only figurative similarity as his one sides, by virtue of those or other conditions, can be longer, than in exact contours of a pyramid, others - are shorter; in real conditions in places of a joint of adjacent sides there can be "cracks", instead of edges of a pyramid; the bottom or top sides can be extended one concerning another. However the general determination of the form as «pyramidal» is fair for consideration of principles of work.

For the even greater escalating energy of the solar rays directed in the helio-absorbent chamber, can be applied consistently and the second external concentrator of solar rays with increased inlet and outlet apertures. It is realized in the other variant of the technical decision offered in the present assumed invention, namely - by accommodation in surrounding space additional ray-reflecting surfaces, the reflected rays from which, act in an entrance cavity of the specified external concentrator. These surfaces, because of rather low cost, can be developed on so sizable areas, that the stream of solar rays in the helio-absorbent chamber in the external concentrators located at it can reach anyone beforehand set, values and to create rise in temperature in last up to the size much more exceeding temperature of boiling of water, for example, up to 200-300°. By means of such, already high-potential, thermal energy is provided reception steam or a steam-air mix, with significant overheating of them to transform their thermal energy in electric with high efficiency, in particular, by means of application of the primary converter - steam-turbo electric generator. Fulfilled in the last of steam or a steam-air mix can go to consumers of the heated up water and air, in particular, to apartment houses and cattle-breeding farms, hothouses, etc. or on other technological purpose.

Additional ray-reflecting surfaces can settle down also in household and mobile (mobile, tourist) conditions with the help of simple basic adaptations, improvised means - surrounding trees, apartment houses and other structures, sites of a local relief. Thus their position can periodically be corrected depending on position of a solar disk in a firmament. Each square meter of similar ray-reflecting surfaces can have, in the developed designs, cost within the limits of 3-4 US dollars, than unique economic efficiency of the offered way is defined. Ray-reflecting surfaces can be carried out by means of rather light plates of the small size from foamy and composit materials, easily transferable and transportable, and also by means of fabrics and films, which surface is supplied with a ray-reflecting material and which at transportation (or in a conditions of life) can be turned off, develop, supplied with light, developing basic adaptations.

In industrial variants such thermo-transformating installations additional ray-reflecting surfaces can be fixed by means of the flexible materials fixed with the help of ropes and holding bearings, with remote, automatic or manual control. Thus, in case of the big sizes and high capacities of thermal chambers, helio-boilers, the last can be carried out in the cylindrical or toroidal form with a width, mainly 5-20 , covering free volume of space around of an axis in which the subsequent are carried out power, helio-wind-power and
- aerodynamic processes by manufacture of electric energy - in corresponding power channels. In this case rope lines on which sites settle down additional ray-reflecting surfaces, can on a circle, with significant radial distance, cover virtual cylindrical perimeter of a helio-boiler - a solar intensified hothouse complex. Thus rope lines can, synchronously with movement of a solar disk on a firmament, to move, simultaneously moving the ray-reflecting surfaces. If the last are fixed with the help of two cooperating rope lines - top and bottom - that position of one of them, for example, ground can be corrected by the elementary mechanisms during the seasonal periods that, in corresponding position of ray-reflecting surfaces is relative to helio-absorbent chamber, their optimum angular inclination not only within light day was defined also, but also during the seasonal periods. At increase of speed of a wind over allowable, flexible ray-reflecting surfaces can accordingly be stored. On specified rope lines (or another) - can be put forward in corresponding sector of surrounding space hurricane-protective inclined "walls".

The way allows also application of the several concentric rope lines located at various levels on height and-or, practically at one level, at their accommodation on significant (corresponding) distances from each other. The way provides an opportunity of accommodation of ray-reflecting surfaces, in those or other forms, on rather significant distances from a solar intensified hothouse complex, depending on economic and technical-economic needs because losses of energy of the reflected sunlight at passage of a light stream to the pure air environment of multikilometer distances are insignificant, and also uses of a snow cover for a corresponding direction of the solar rays reflected from him, and both with southern, and with northern the parties. In the certain cases the ray-reflecting surfaces can place with the help of the elevating tanks filled with light gas directed by rope tension devices. The effective decision is also accommodation of ray-reflecting panels in specially created trenches covered from above with a transparent material. In this case the ray-reflecting panels protected from a wind, will have rather easy and especially cheap designs. Trenches should have thus corresponding stocks on width and depth and to be used as a hothouse for cultivation of vegetables and berries.

The way allows to create helio-power boiler-houses in microdistricts of cities, on inhabited, including multi-storey houses, having helio-absorbent and thermogenerating chambers on their roofs, with an arrangement of external concentrators of solar rays by means of same roofs and with accommodation of ray-reflecting surfaces according to features of building of complexes of apartment buildings, including walls of opposite houses, public territories and streets. In the most part of regions, for example Byelorussia, 1000 ² such areas will give 100kWt capacity of thermal energy. Escalating of capacity of solar intensified hothouse complexes due to additional installation of ray-reflecting surfaces is more economic than increase in capacity of thermal power station, the atomic power station, hydroelectric power station in his any form. It specifies the big potential opportunities for helio-power producing. For example, in Byelorussia where opportunities of helio-wind-power producing are less preferable, in comparison with the majority of regions of Russia (in connection with the special nature-climatic data rather attractive in other aspects), these potential advantages look as follows. Average year capacity of the solar radiation allocated on a platform, close by angular position to normal, in territory of Byelorussia is 0,13 kWt/m². At the same time cost of creation of ray-reflecting surface on the active area in 1000 m², together with the bearings, holding ropes and means of their periodic reorientation, makes about 9 thousand US dollars. This implies, that the increment of thermal capacity of helio-transforming chamber in structure of a solar hothouse complex makes 90 US dollars for 1 kWt. Thus, specific cost of construction (or expansions) the thermal power station, working on natural gas, in Byelorussia makes size about 500 US dollars for 1 kWt, that is much more expensive. But the main thing - is eliminated necessity for purchase and burning of natural gas. With reference to municipal helio-and usual boiler-houses comparison leads to parameters of the same order. For achievement of such unique result in Byelorussia, in its territory it is possible to carry out, according to the prospective invention, construction of the solar intensified hothouse complexes containing the helio-absorbent chambers, external concentrators of solar rays and rather powerfully advanced additional ray-reflecting surfaces, and it will release her from external purchases of energy carriers for manufacture of thermal and electric energy.

In Ukraine, Siberia and on the Far East the Russian Federation, at coast of northern rivers and the seas of Europe, on the African continent, the Near East, India, China, Southeast Asia, South America economic efficiency of the offered way will be higher.

For a basis of maintenance of high thermo insulation of helio-absorbent chamber in the offered way application of a lightproof thermo insulating material is taken. His thickness and thermo insulating properties are chosen only on conditions of quality of thermo insulation, that is without disputed coordination with necessity of performance it is possible the big transparent sites in walls and-or a ceiling of helio-absorbent chamber. Transparency is reached by accommodation of the last in thick lightproof, a base thermo insulating material (walls and a ceiling) thin-walled geometrical forms as the tetrahedral truncated pyramids and/or the truncated cones, available tops inside of the helio-absorbent chamber, filled in most cases especially qualitative and cheapest heat insulator - air. For decrease in the cost price of building and assembly jobs such concentrators and conductors of solar rays can be carried out as beforehand made, on a production line, the building blocks containing inside a ray-reflecting surfaces, including formed by a number of modules between which air backlashes are formed. The last are used for increase a quality of thermo insulation, including, through the improved recycling of thermal losses. For example, if they are closed by thin layers of a transparent thermo insulating material the air environment formed in building blocks, in the consecutive order can be pumped over through internal helio-absorbent environment of the chamber or go directly to power channels. The air environment from last, in particular, under pressure, portions can be injected together with water in the evaporating cavities placed in a helio-thermo transforming thermo accumulating material. The formed steam-air mix can go to the steam turbine. Thus thermal energy, with application of means of its recycling, in general practically is not lost is useless from helio-absorbent cavities, and efficiency of transformation in it a solar energy in heat comes nearer to unusually high size - more than 95-97 %. Air with utilized thermal energy is pumped over from a layer in a layer along an external surface of the specified geometrical forms, and it is possible - and through them, cooling them and protecting the transparent bases of sites of pyramids - optical paths from influence of a dust. If building blocks do not contain compound modules their lateral sides contain apertures through which their internal air environment connected on the one hand with surrounding atmosphere proceeds, and with another - with consumers heated up airflow, absorbing the heat-loses in them.

The created bunches of the concentrated stream of the solar rays, entering into internal environment of a helio-absorbent chamber, have the reduced cross-section and significant distances among themselves. It allows to create a strong internal bearing skeleton for walls and a ceiling of helio-absorbent chamber, available between these bunches, not reducing and not blocking for these purposes an external transparent surface which is made from ray-conductive strips or squares, the available parties closely to each other.

As in internal air of environment of the helio-absorbent chamber the heat (100° and more) is defined by productivity of selection from it, can design be provided, that thermal energy, including pumping of air the internal bearing skeleton, mainly, is fenced off in the certain constructive variants, from this space with the help of a thermostable thermo insulating material.

In that case bearing skeleton settles down in an air layer which also is continuously freshened and has no heat.

For most effective utilization of the built-in concentrators and conductors of solar rays it is necessary to provide receipt in them of solar rays from surrounding space under the minimal corners concerning their axes. It will cause the minimal number of reflections of solar rays from their ray-reflecting surfaces and decrease in power losses in them. Besides efficiency of the pyramidal built-in concentrators and conductors of solar rays increases, at their certain sizes if inside them form, at least, on one additional ray-reflecting sides which passes through axes of concentrators or in parallel axes.

External concentrators of solar rays have essentially two different variants of realization. One of them is defined by that it have is relative to helio-absorbent chamber mobile when it in process of moving a solar disk on a sky turns concerning an axis of its external surface or moves along it.

Other variant is defined by that on perimeter of helio-absorbent chamber stationary external concentrators of solar rays place some. If its perimeter has, for example, cylindrical (pyramidal, toroidal, conic) the form accommodation around of it 12 external concentrators of solar rays when their vertical sides, as a whole, do not change the position according to coordinates of a solar disk in a sky is optimum, but their certain sites around of the axes located, mainly, in their plane can turn in function of last.

In the certain geographical and climatic conditions others can be applied and other forms of the external concentrator of solar rays, and also, volume number combined, variants of accommodation and fastening of the last is relative to helio-absorbent chamber.

Household, mobile and tourist variants of execution helio-absorbent chamber with the external concentrators of solar rays attached to it differ conditions of mobile installation, accommodation and setting of components of ray-reflecting surfaces, all equipment, requirements of relative simplicity and cheapness.

If the built-in concentrators and conductors of solar rays are carried out compound, from the separate connected elements placed in assembly modules of complete building blocks terminal sites of the general design of this optical path as the truncated pyramids or cones, can become covered by a thin mirror layer of copper or even special materials, including, silver or gold that will considerably improve quality of a smooth surface in area of the highest density of a stream of solar rays.

Geometrical forms of the built-in concentrators and conductors of solar rays can be carried out both from black or nonferrous metal, and from a glass, foamy materials, plastic or composit materials with their covering ray-reflecting surfaces.

It is provided also, that internal environment of the helio-absorbent chamber is connected to safety valves. In connection with stated become clear many-sided nature of structurally-technological realizations and multi-aspecting of basic sub-variants in the offered way of thermo transformation of a solar energy. It explains a significant amount of additional differences in his technical essence concerning known technical decisions and the named prototype.

In particular, at application of volumetric forms of helio-absorbent chamber difference will be in the fact, that efficiency of thermo insulation and energy saturation of last raise by means of that the lightproof thermo insulating material with built-in concentrators and conductors of solar rays carry out as preliminary made building blocks fixed to its basic designs, and the specified building blocks make, mainly as flat, roughly, rectangular forms which, in particular, make of the assembly modules connected in packages and forming as a product of technological assembly ready building blocks with necessary parameters of thermo insulation in height, and assembly modules at packing divide by thermo insulating air layers with the help of basic distance platforms, and in a thermo insulating material of assembly modules build marked components, Of which form a resulting structure of built-in concentrators and conductors of solar rays and which have the form of hollow geometrical forms, in particular, the truncated tetrahedral pyramids which surfaces supply with ray reflecting materials, and the bases close by a transparent thermo insulating material described in insignificant size of factors of absorption and reflection of solar rays, and components of the built-in concentrators and conductors of solar rays consistently changing in cross-section interface them ray reflecting surfaces so, that solar rays in the building blocks collected and mounted on basic designs receive only unidirectional resulting passage - from external space in internal environment of the helio-absorbent chamber, thus, at least, a part of the thermo insulating air layers formed between assembly modules of building blocks, connect, for example, consistently with means and systems of recycling of thermal losses.

Difference will be, that hollow volumetric geometrical forms, which surfaces are covered with a ray reflecting material and which form the built-in concentrators and conductors of solar rays, pawn as ready designs in consistently located and structurally connected apertures of the corresponding cross-section sections contained in collected building blocks which include the marked assembly modules with the specified apertures executed in them and thermo insulating air layers between them, and the bases of ready designs of geometrical forms of the built-in concentrators and conductors of solar rays close by a transparent thermo insulating material individually and-or in structure of the collected building blocks.

Difference will be, that the thermo insulating air layers formed in building blocks and-or in built-in concentrators and conductors of solar rays, connect among themselves, to surrounding atmosphere and, for example, with internal helio-absorbent environment of the chamber by means of the backlashes formed between external surfaces of building blocks and their internal air environment, and also created adjustable air channels between last and surrounding atmosphere and air outlet channels through whom submit heated up by heat loses air from the internal air environment of building blocks and-or the built-in concentrators and conductors of solar rays in technological energy-transforming channels due to what there is a unidirectional air stream from a surrounding atmosphere along surfaces of volumetric geometrical forms as components of the built-in concentrators and conductors of solar rays by means of what take away thermal energy, arising and transmitted in internal thermo insulating environment of walls, a ceiling and the bottom of helio-absorbent chamber, thus through last create an air stream by means of spilling of the air from it, in particular, through an internal cavity of helio-absorbent chamber, with design productivity for his subsequent use as heat-carrier, and, at least, one of thermo insulating air layers of the given environment is connected to surrounding atmosphere with the help of air channel, lead through adjustable air inlet latches, thus by means of ceiling of helio-absorbent chamber one air channel connected to an adjustable latch and in parallel - to the safety device by means of which carry out protection of last against excess internal pressure and temperatures over allowable values is lead, at least.

Difference will be, that hollow volumetric geometrical forms as components of the built-in concentrators and conductors of solar rays, carry out from metal, a glass, plastic, the composit and-or foamy materials supplied with ray reflecting surfaces, in particular, formed by means of sputtering technologies.

Difference will be, that the external concentrator of solar rays carry out rotary concerning an axis being the geometrical axial center of an external surface of the helio-absorbent chamber for what his sides fix concerning basic base by means of bearing of rotation, and concerning a surface of ground - for example, by means of mobile bearing.

Difference will be, that the helio-absorbent chamber carry out in the form of the flat parallelepiped placed vertically, inclined, horizontal.

Difference will be, that external concentrators of solar rays apply simultaneously as convergent tubes, concentrating and directing near-ground natural windflow for what in single design performance and accommodation of helio-absorbent chamber have wind-directing jalousie below and-or above last.

Difference will be, that, in household and mobile variants of use, the helio-absorbent chamber applies as means to hot processing foodstuff, in particular, for drying chemist's grasses, mushrooms, vegetables, fruit and fish-products.

Difference will be, that, in mobile and household variants of use, the helio-absorbent chamber applies to hot processing pottery.

Difference will be, that, in a marching variant of use, the helio-absorbent chamber applies as a laboratory variant of the heating furnace, including for making liquid melts of light materials.

Difference will be, that the helio-absorbent chamber connect by means of the fluid environment with in full or partly thermo insulating in volume a thermo accumulating material, placed in a body of the ground, in particular, in an earth layer under the helio-absorbent chamber and-or in earth, the up-ground volumes located near to it.

The resulted differences of a way of thermo transformation of a solar energy, according to the prospective invention, concerning the above-stated prototype and other known technical decisions do not settle all opportunities of a way and additional explanatories do not require, in view of the below-mentioned description of one of concrete variants of realization.

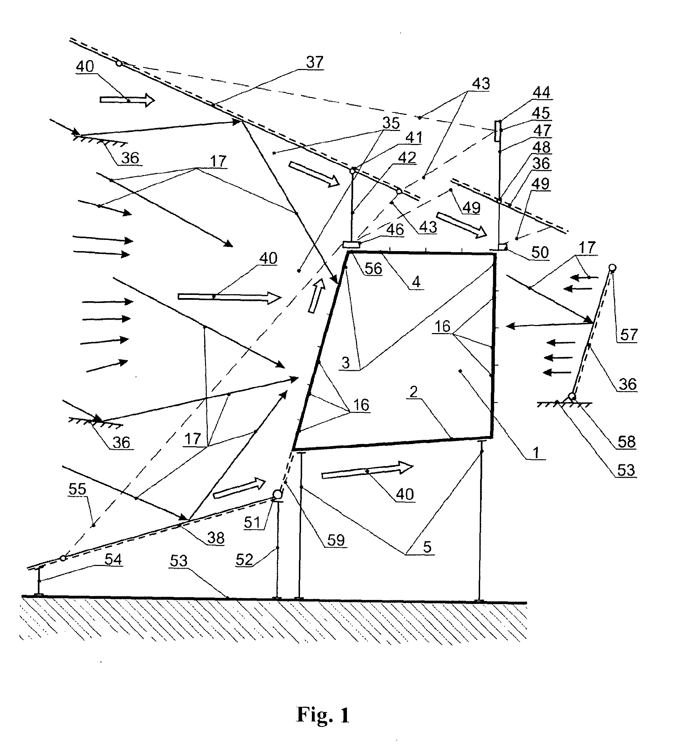

In the variant of realization of a way of thermo transformation of a solar energy resulted on figs 1-6, according to the prospective invention, with separate explaining sub-variants of schematic decisions, the practical way of overcoming of a traditional disputed situation in helio-thermo energy producing is shown due to consecutive connection of two concentrators and conductors of solar rays in interaction with additional ray reflecting surfaces, is system placed is relative to helio-absorbent chamber.

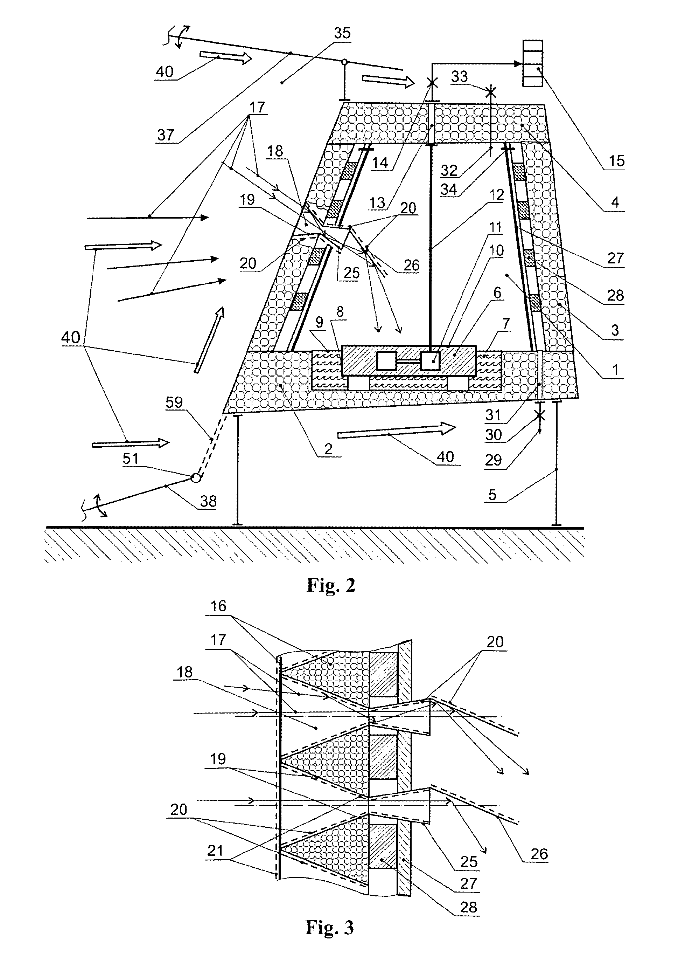

The helio-absorbent chamber 1 (Fig 1) contains the thermo insulating bottom 2 executed from foam concrete, a wall 3 and a ceiling 4, made of a high-quality lightproof thermo insulating material, for example, from foam-glass in which special devices for an injection of solar rays outside in internal environment of the helio-absorbent chamber 1 which more detailed description will be given below are located. Purpose of helio-absorbent chamber which is located on basic racks 5, consists in transforming to heat and in part to accumulate in the internal environment energy of solar rays for what in it is created two temperature levels of thermo transformation of solar rays and accumulation of thermal energy. According to these two levels are applied in this case following technological helio-thermo-transforming materials (Figs 2): High-temperature material 6, in particular, a mix of materials with temperature of boiling essentially exceeding 100°, and with the raised specific thermal capacity at phase transition from a firm condition in fused-liquid and back; a classical material in thermodynamics as a working-medium - water 7 with known physical properties. As a material 6 with comprehensible parameters the tin can be used: temperature of fusion 232° and specific heat of fusion - 14 kcal/kg. However higher technical-economic feasibility application as a technological material 6 of mixes on a basis stearins, paraffins, salts of alkaline metals and some kinds of plastic which can be characterized by temperature of fusion in a range 60-180° , specific heat of fusion has of 30-40 kcal/kg and a boiling point up to 500° with at their low cost price. The high-temperature material 6 is placed in capacities 8 which are shipped in the water 7 which are taking place in large, group capacities 9. Capacities 8 have concerning small volume, are thermo insulated good, are located on bearings and made out in design, allowing to carry out their mobile dredging in a zone of service. Capacities 8 are placed on length of helio-absorbent chambers with the minimal technological backlashes and covered from above with a sheet material 10, for example, from steel which contains the heat-removing edges acting downwards shipped in a material 6 on sufficient depth. Heat-removing edges can be formed on a sheet material 10 by punching with a deep extract, that promotes (in case of his dark color) to good absorption of solar rays and a fast heat transfer in environment of a technological material 6, thus beam losses of thermal energy of the last, including in the fused kind are essentially reduced. As a high-temperature technological material 6 the loose material which do not lead up to temperature of fusion, for example, rubble which, except for capacities 8, place in underground or the ground thermo insulating storehouses connected to capacities 8 by heat exchange air lines or pipelines with the liquid heat-carrier can be applied in addition also. In case of designed of helio-absorbent chambers as a flat parallelepiped or as connected among themselves flat, extended in length, parallelepipeds thermo accumulating of thermal energy is carried out independently, in thermo accumulating in various designs.

The high-temperature thermo accumulating material 6 can carry out functions not only a thermo accumulating material, but also be used as the heat-carrier by means of which incorporate a number of thermo accumulating devices, and in that case instead of capacities 8 trumpet collectors, and heated up water 7 can be used can place also in the trumpet collectors covering capacity 8 (a collector with a material 6).

In the environment of a high-temperature technological material 6 power channels 11 in which the heated up water 7 and hot air from internal environment of the helio-absorbent chamber 1 which under influence of the raised temperature in capacities 8 form an steam-air mix with adjustable temperature and pressure as a working-medium for the subsequent applications is injected are established, in particular. The steam-air mix acts on pipelines 12, through the channel 13 in a ceiling 4 and controller 14, with an automatic or manual drive, to the block of consumers 15of thermal energies.

On graphic illustrations the arrangement of power channels and means 11, 12, 14 is shown relative, and devices for an injection of water and air, regulation of pressure and temperatures of steam-air mix are not shown, as elements standard. The given variant of formation and use of a steam-air mix only illustrates application of the offered way thermo transformation of a solar energy. There are a lot of effective variants.

Walls 3 and ceilings 4 of helio-absorbent chambers are made in this case of building blocks 16 which are executed as thermo insulating and ray-conductive (Figs 1, 3). Building blocks 16 are executed from foam-glass, which on Figs. 3, 4 is marked by special, easily understood shading. They can be executed also from foam concrete, foamed polyurethane and contain reinforcing cage, which on illustrations is not shown. The main requirement to a used base material in them is high quality maintenance of thermo insulating at cheapness of manufacture. Thickness of a thermo insulating material in some industrial variants of the helio-absorbent chamber can reach 400 mm, and it on the properties is not intended for passing of solar rays, so as is lightproof, that due to that the beforehand set level of thermo insulating of helio-absorbent chamber 1 is realized rather high.

For carrying out injections of external solar rays 17 in last through apertures in a thermo insulating lightproof material of building blocks 16 place the built-in concentrators and conductors of 18 solar rays (Figs 2,3,4) which have the required reduced target apertures for what minimization of thermal losses can be achieved, including their ray components. The stream of solar rays 17 is considerably condensed to an input in internal environment of the helio-absorbent chamber 1 by reflection from cases of 19 built-in concentrators and conductors of the solar rays built in thick a lightproof thermo insulating material of building blocks 16 for what their surfaces become covered by a layer of a ray reflecting material 20 (on illustrations marked by a dotted line).

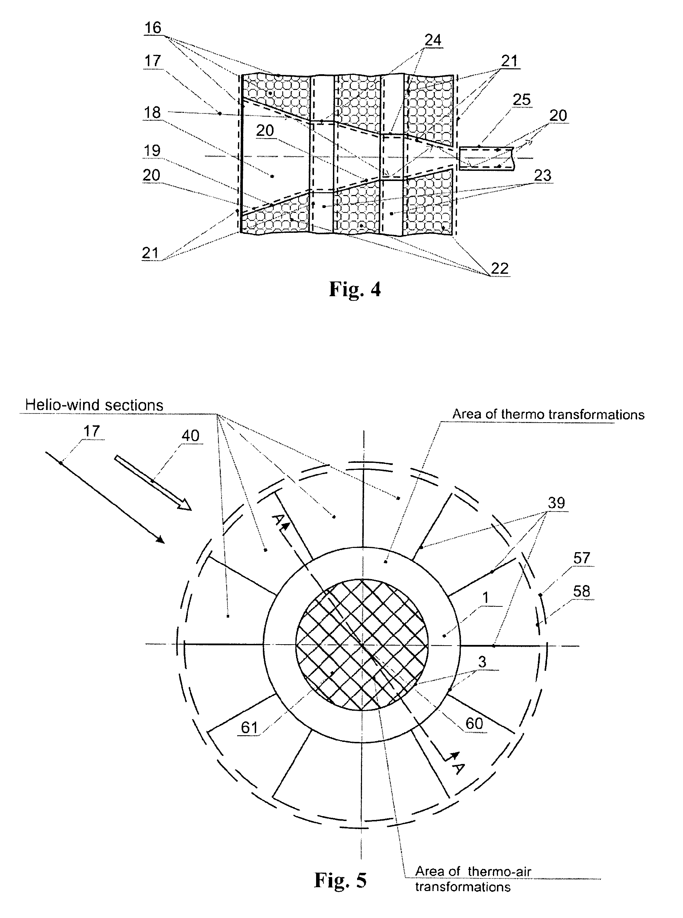

Cases 19 in this case realization of a way look like the truncated pyramid and are executed from a thin-walled glass which is in addition covered with a film, sputtered by the most thin layer of aluminium on the part of a body of the case. Such film creates a mirror reflecting layer of an aluminium surface of especially high cleanliness (its roughnesses do not exceed the fourth part of length of a wave of a sunlight). High-quality technologies and a film for these purposes are available in a batch production. However, especially perspective material for these purposes and helio-power production as a whole are a glass and quartz films, work above which creation is carried out. Cases of 19 built-in concentrators and conductors of 18 solar rays can be carried out from cheaper materials, in particular from a steel sheet, from plastic, fibreglasses and other materials. Forms of cases 19 can become of some other hollow geometrical forms - figures, as the truncated cones, cylinders, many-sided pyramids and prisms, however, at all these forms the external irradiated surface of helio-absorbent chambers 1 is essentially worse used. In many cases of the most effective the form of the pyramids extended on length and available vertically is or is horizontal (or inclined in inclined flat helio-absorbent chambers). If the big bases of cases 19 (they are well submitted on Figs. 3, 4) have the form of rectangulars adjoining to each other or squares the external ray conducting surface of the chamber through which direct solar rays inside of it, is maximal at the fixed size of its surface. At height of building blocks of 16 (Figs 3, 4) determining thickness of walls 3 and ceilings 4, equal 400-800 mm, the parity of the areas of the greater and smaller bases of the truncated pyramids-concentrators 18 can reach the big sizes at values of corners between their sides and axes 5-8 °. The size of the last in the specified range of thickness reduces quantity of reflections of solar rays 17 at their passage through cases of 19 built-in concentrators and conductors of solar rays that allows to minimize the power losses connected to absorption and reflection of solar rays. The parity of the areas of the greater and smaller bases - inlet and outlet apertures defines, at least, corresponding decrease and thermal losses from internal environment of the helio-absorbent chamber 1 in surrounding atmosphere, for maintenance of that they are closed by thin layers a transparent thermo insulating material 21. As the given material thin-walled glass with good optical characteristics, a glass film and other materials can be applied. Thus «glazing» of the bases of cases 19 can individually be carried out, with backlashes between corresponding sites of a transparent material, or in structure of building blocks and even walls 3, ceilings 4 as a whole. The choice of a variant is defined by the accepted technological scheme of additional recycling of thermal losses, in certain which variants air from an external atmosphere receives purposeful movement along external surfaces of cases 19, for example, in internal environment of the helio-absorbent chamber - for heating and further use as working-medium and heat-carrier. Thus prominent feature of the offered way is recycling of thermal losses in the built-in concentrators and conductors of solar rays which arise at their numerous reflection from mirror lateral surfaces.

On Figs 4 one of variants of configuration of the built-in concentrators and conductors of solar rays in building blocks 16 is resulted. The last are made each of three assembly modules 22 between which the air cavities 23 playing the important role in increase of efficiency of the helio-absorbent chamber 1 are formed, including in structure of one of technological schemes of recycling of thermal losses.

Assembly modules 22 are executed in this case from foam-glass, divided by basic platforms 24 (are relative shown with overlapping functions of transitive ray reflector) and have the form of a parallelepiped with thickness (height) of everyone of 50-150 mm. In the given example of installation of the built-in concentrator 18 his case 19 is made of three parts as the truncated cones divided among themselves within the limits of air cavities by 23 basic platforms 24 with put on their surfaces by ray reflecting coverings and having on end faces radial grooves of small depth for free promotion of air. In the other variant basic platforms can be carried out on end faces of assembly modules 22, or in other places which have been not connected to the channel - by an optical path. Connection of his three basic parts can be carried out without application of cylindrical ray reflecting inserts 24, due to rapproachement of inlet and outlet apertures within the limits of an air backlash so that solar rays did not receive access in an air cavity 23 between assembly modules but that air had an opportunity of free course.

Outlet and inlet apertures of each component of the case 19 are closed by a thin layer of a transparent thermo insulating material. Between surfaces of compound modules 22 layers of a transparent thermo insulating material 21, as shown in Fig 4 can be continued, but thus in the last through passage apertures of the corresponding size and in corresponding places for passage of air should be formed, depending on the accepted technological scheme of recycling of the thermal losses arising as on surfaces of cases 19, and penetrating in them of the closed cavity of helio-absorbent chamber 1.

The output of the concentrated stream of solar rays 17 in last is carried out in the given variant through the additional ray-outlet channel 25 - the internal optical path also supplied with a ray reflecting surface 20. In the given optical path the increase in the area of cross-section of the concentrated stream (bunch) of solar rays 17 with reduction of their density energy-saturation and their orientation in the set coordinate area technological a helio-absorbent material 6, 7 is made. In the submitted variant such orientation is carried out due to application auxiliary ray reflecting surfaces 26 (Figs. 2, 3) which are carried out, mainly, with adjustable position and containing also lateral ray reflecting sides (on Fig 4 are not shown). Fastening of internal optical paths 25 is made with the help of the apertures executed in the additional thermo insulating layer 27. This layer carry out from a thermostable material, for example, foamglass, covered with an additional heat insulator, in particular - asbestos-cement plates, and it is intended for thermo insulation from high-temperature internal environment of the helio-absorbent chamber 1 its internal basic, bearing constructive base 28 (for example, as the wood-metall beams well proved as effective element base for forthcoming helio-power constructions). The arrangement of bearing designs of internal basic base 28 is based that distance between axes of the built-in concentrators and conductors of solar rays, and accordingly, between their smaller bases - outlet apertures have significant size in a kind of a pyramidal design of cases 19. The design, thus, is executed so, that the basic beams determining durability and windstability of the chamber helio-absorbent 1, in its volumetric form, settle down between bunches high-concentrated streams of solar rays without reduction of its external transparent surface. Such technical decision has great value for realization of a way, according to the prospective invention, and for overcoming restrictions in maintenance of necessary quality of thermo insulation of helio-absorbent chamber 1. Moreover, as air in the internal environment of last in the heated up form is used in the power purposes, and it is necessary to fill up it constantly the air cavity between an additional thermo insulating layer 27 and its internal surface is included in the technological scheme of recycling of thermal losses, with submission of external air through the mentioned above air layers, sucking away thermal losses from walls, a ceiling and the bottoms and effectively cooling all elements of a design requiring for it. In the helio-absorbent chamber 1 reserve and safety air channels are stipulated:) through the bottom 2 it is lead the auxiliary air-inlet channel 29 with adjustable deflector 30 and apertures 31 to the closed cavity separated by an additional thermo insulating layer 27; b) through a ceiling 4 it is lead the auxiliary air-outlet channel 32 connected to adjustable deflector 33, on which input the automatic safety valve from excess of pressure and temperatures concerning the set limiting value in the helio-absorbent chamber 1 can be established. The output of air from a cavity separated by an additional thermo insulating layer 27, in the internal environment of last is carried out through airflows 34. The similar channel, on similarity of adaptations 29, 30, 31, is carried out and in the first air layer 23 between assembly modules 22, that on illustrations are not shown. These auxiliary air-inlet channels are created for cases when productivity air-pumping along surfaces of cases of 19 built-in concentrators 18 has not enough on conditions of selection of capacity from the helio-absorbent chamber 1.

For highly economical increases in capacity of helio-transformation and rises in temperature in technological materials 6, 7 are applied external concentrators of solar rays 35 and additional ray-reflecting surfaces 36. The external concentrator includes top 37 and bottom 38 of ray-reflecting surfaces, and also a lateral ray-reflecting surface39 (Fig 5) which are located approximately vertically and consequently on Fig 1 they are not shown.

All four ray-reflecting surfaces-sides of the external concentrator of 35 solar rays 17 are focused among themselves in the spatial form reminding the truncated tetrahedral pyramid. If the simplified functions, approximately, as for the reduced the price household variants his sides in common would form quite exact form of the truncated pyramid were given to it. However, in given effective enough industrial variant of realization of a way, according to the prospective invention, top 37 and bottom 38 sides of the external concentrator 35 of solar rays are executed rotary concerning a surface of ground in function of coordinates of a solar disk in a firmament (or time of day) to provide probably big power consumption of streams of the solar rays 17 acting on the irradiated surface of the helio-absorbent chamber 1, and to direct them to the internal concentrator 18 (and a conductor) of solar rays under possible a smaller corner to his axis. Besides 17 additional parallel functions as concentrator of a natural wind 40 are given to the external concentrator 35 of solar rays also. The accent by means of pyramidal designs 35 reflects the main technological problem of last in concentration of solar rays. Its second problem as it is specified, concentration of a natural wind in a direction of auxiliary aerodynamic means before the wind turbine, including maintenance of protection of the certain groups of ray-directing rotary surfaces from wind loadings and corresponding decrease in their cost is. Besides the pyramidal design 35 there is one more important technological problem: the collection and a conductor of the thermal emissions arising owing to incomplete reflection of solar rays from a ray-reflecting material. The top side 37 is executed approximately trapezoidal and fixed on the part of the smaller basis by means of the bearing of rotation 41 located on the bearing design 42, built-in in external base of helio-absorbent chambers 1. Direct definition of angular position of a side 37 is carried out by ropes 43 (rope slings), the attached one ends to tension mechanisms 44, 45, 46, and others - to the peripheral ends of a bearing design of a side. Tension mechanisms 44, 45 are located on a back basic design 47 concerning which it is fixed also by a additional ray-reflecting surface 36 by means of bearing of rotation (turn) 48, a rope sling 49 and the tension device 50 (the second tension device of this design is combined with the mentioned above tension device 46). The resulted example does not limit multiple opportunities of accommodation of tension mechanisms and bearing of rotation.

The bottom side is executed also, approximately, in the trapezoidal form and is fixed on the part of the smaller basis by means of bearing of rotation 51 (slidings or rotor) to the basic racks 52 located by means of fixing means for surfaces of ground 53. Basic racks 52 are a component of external base of helio-absorbent chambers 1 and a part of basic designs, to which (in particular, by means of vertical bearing of rotation) are fixed lateral ray-reflecting surfaces 39 - lateral sides, roughly trapezoidal designs of the external concentrator of solar rays. The peripheral part of the bottom side 38 in extreme position, under a corner about 30° to a horizontal plane, leans on bearing racks 54 which height in industrial designs makes size about 2m. The territory under the bottom side 38 is intended for economic use, in particular, for cultivation of vegetables and fruit in the conditions approached to hothouse. The corner of a turn bottom ray-reflecting surface 38 is setting with the help of a rope sling 55 which are fixed by one ends to its peripheral designs, and others - to the tension mechanisms 56 fixed, in particular, on bearing designs 42.

Base designs of sides of 37, 38, 39 external concentrators of solar rays can be executed on the basis of light, strong and rigid wood-metal beams with special impregnation to which the bearing material of sides covered ray-reflecting is attached, and on some sites - helio-absorbent surfaces. In industrial, powerful enough variant of realization of a way, according to the prospective invention, bearing design of the bottom side 38, mainly, it is carried out from fibreglass or as wooden flooring which maintain high wind loadings in working position - up to 30 m/s. At higher wind loading tension mechanisms 56 with the help of a rope sling 55 this side rises in extreme top - wind-shelter position and rests against earlier collected package from three other sides (37, 39) which together lean on bearing constructive base of helio-absorbent cavities and are capable to maintain speed of a wind up to 50 m/s. In those regions where typhoons with speed of a wind more than 180 km/hour take place are applied additional means of hurricane protection.

The described design in the given example of realization of the offered way concerns to helio-absorbent chambers total capacity of 100 thousand in kWt and more, and also to household and mobile installations of low power - up to 100 kWt. The intermediate power range is realized, mainly with application of flat helio-absorbent chamber.

The bearing material covered with ray-reflecting and helio-absorbent surfaces, three other sides (top and two lateral) can represent elastic surfaces, fabric or fiberglass with strengthening strings or grids, or more rigid surfaces - from fiberglass, foamed polyurethane, others enough strong and light composit materials. They should maintain wind loading in working position till 20-25 m/s after which achievement they develop in a package leaning on base bearing designs of high durability. At excess of speed of a wind in 30 m/s, they are protected by the bottom side which rises in extreme top wind-shelter position.

In low-power industrial, household, and especially mobile variants of realization of the offered way, according to the prospective invention, feature of a design of all sides 37, 38, 39 external concentrators 35 of solar rays 17, together with itself helio-absorbent chamber 1 are mobility of assembly - disassemblies with application of light pipes, ropes and adaptations for fastening bearing materials with ray-reflecting coverings in a plane of sides. In case of application of flexible bearing materials, can be applied reeling drums with mechanisms of winding - unwindings. However the general feature for all variants of designs is lightening of both sides 37 39 and the raised durability of the bottom side 38 which defines resulting wind stability of all design.

If in a mobile variant of helio-absorbent chamber lateral sides of each external concentrator of solar rays have the general surface of 20 m² which gathers quickly and easily and will transfer the base it means, that its years daily average capacity will reach 6-8 kWt, and assembly - folding the helio-absorbent chamber with a surface of each of four walls on 1 m², with the same surfaces of sides of external concentrators, will have capacity in the majority of regions of Russia and Belarus of 1-2 kWt, with an opportunity of its simple escalating in the first case up to 15-20 kWt, and in the second case up to 5-10 kWt due to application of additional ray-reflecting surfaces 36. (These power characteristics are quite sufficient for thermal and electric maintenance of tourist camp).

The last can be carried out in numerous designs. In considered one of industrial variants accommodation a additional ray-reflecting surface 36 already was specified with fastening by means of a bearing of rotation 48 concerning the basic rack of 47 (Fig 1). an technical-economic variant fastening of additional ray-reflecting surfaces is relative rope lines - top 57 and bottom 58 which features of a suspension bracket are not shown is good. Especially important that such additional ray-reflecting surfaces can settle down and from northern part of helio-absorbent chamber 1, and their inclination can easily be adjusted by position of rope line 58. Ray-reflecting (additional) surfaces 36 for household installations can be made as a set of the light plates which are turned off in rolls of flexible materials, can settle down and be fixed by means of the most various improvised means.

Feature of a variant of realization of a way for northern regions where capacity of solar radiation during the winter period decreases up to 0,03 kWt/m² and is lower, is use multiline rope designs, as the resulted design with rope lines 57, 58, and also elevating designs with the help of tanks with the light gas, holded by tension devices by means of rope extensions, and available so that during reflection of solar rays to direct to an entrance aperture of the external concentrator of solar rays as direct rays from low located solar disk, and reflected controlled ray-reflecting surfaces and a snow cover (or auxiliary ground moved means) solar rays from rather big territories. As cost of each thousand square meters of additional ray-reflecting surfaces in conditions of northern regions, in view of use of a snow cover and ground ray-directing means, will not exceed 6-7 thousand US dollars, it means, that everyone of 1 kWt of such increment of the established thermal capacity of the helio-absorbent chamber will not exceed (at capacity of solar radiation of 0,03kWt/m²) 300 US dollars. Cost of the established capacity of the standard thermal power station working on natural gas of 1 kWt, essentially exceeds this value. However, at realization of a way, according to the prospective invention, disappears necessity of delivery and burning of natural gas, mineral oil or coal with the purpose of reception thermal, and further - electric energy.

In such regions, as for example, in the Arabian Republic Egypt, Iraq, Saudi Arabia and in general the states of the Near East and Southeast Asia, including India, Vietnam, Korea and China, cost of full construction of the established capacity of 1 kWt of helio-thermo-electric power stations after working off of their components in a batch production, and also in view of manufacture of thermal and electric energy, will not exceed 400 US dollars, that serial helio-thermo-electric power stations with mid-annual capacity 1 million in kWt will have cost no more than 400 million dollars, and the economic return on construction will not exceed 3 years.

In a considered variant of realization of the offered way functions of the concentrator of a ground natural wind are given to the external concentrator of 35 solar beams with the purpose of additional development of the electric power. The wind 40 acting in his inlet aperture, is energetically condensed, passing through a created pyramidal design. The bottom layer of the concentrated wind 40 acts through wind-directing and ray-reflecting or helio-absorbent designs 59 under the bottom surface of the bottom 2 and-or above a ceiling 4 and further will be transformed in channels who on graphic illustrations are not shown. The inclined bottom surface of the bottom 2 allows to utilize in directed windflow filtering thermal losses and even to create artificial windflow in addition to natural.

Average and top layers of a windflow 40 act in wind-transforming channels, being reflected from the top side 37 and lateral sides 39.

Additional ray-reflecting surfaces can be fixed thus around helio-transforming chamber 1, that, reflecting solar rays in a necessary direction, they also focus and concentrate natural windflow.

The helio-absorbent chamber 1 with the built-in concentrators and conductors 18 of solar rays 17 and external concentrators 35 of solar rays and the natural wind, energetically amplified with additional ray-reflecting surfaces 36, make in a single helio-themo-transforming complex allowing in the subsequent channels to develop the cheap electric power.

On Fig 5 one of variants of realization of a way, according to the prospective invention, for powerful industrial designs of helio-thermo-electric power stations is submitted. Here the helio-transforming chamber 1 is executed in roughly toroidal form, covering an axis 60 and internal space 61 in which the energy-transforming channels are placed.

External surrounding space dismembered by vertical ray-reflecting and wind-reflecting sides 39 on 12 sectors, and around of this space are placed, in particular, rope lines 57, 58 on which around of an axis 60, on a circle, moves an additional ray-reflecting surface which inclination concerning a surface of ground depends on the location and accordingly from position of the sun. Change of an inclination additional ray-reflecting surface 36 according to movement of a solar disk on a firmament allows to direct solar rays on the built-in concentrators and conductors of solar rays with the maximal capacity of their stream under the minimal corner to their axes.

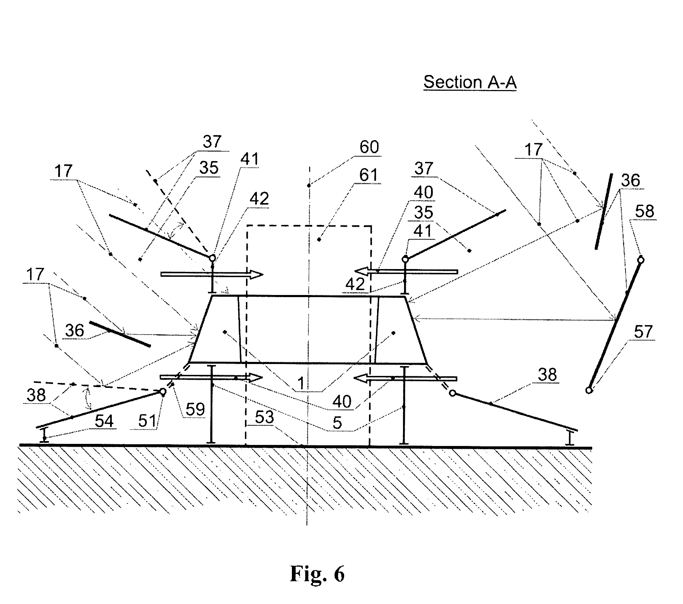

On Figs. 6 the fragment of a considered variant of realization of a way, according to the prospective invention, in section
- specified on Fig 5 is submitted. In this case in vertical section the chamber 1 covering around of an axis 60 working space 61 where processing of thermal energy received as a result of absorption by the helio-absorbent chamber 1 of solar rays 17 is carried out, submitted in space 61 as streams of a high-temperature working-medium and-or superheated steam-air mixture is submitted The last concerns to the most part of consumers 15 of thermal energy. On Fig 6 various variants of an arrangement of additional ray-reflecting surfaces 36 and directions of the solar rays 17 reflected by them in an entrance cavity of external concentrators 35 of solar rays are shown. Such surfaces 36 can place in specially executed trenches and-or to be united in groups, fields with group control in function of coordinates of the solar disk, protected from a wind and dispersion of heat by means of transparent and thermo insulating coverings.

On the resulted illustrations of more attention it is given to explanatories to more complex variants of realization of the offered way, especially regarding rotary sides of the external concentrator of solar rays and a modular design of the building block of the built-in concentrator and a conductor of solar rays. However, the way can be realized and at motionless sides of the external concentrator and, in particular, with application of local rotary sites of his lateral sides which contain a ray-reflecting material, at least, on the one hand their surfaces, with a group or individual drive of turn of these sites whereas on the other hand can place the helio-absorbent sites. The building blocks containing built-in concentrators and conductors of solar rays in a file of a lightproof material with high thermo-insulating properties, at well prepared "know-how", on advantage, do not include compound modules, and their internal ray-reflecting surfaces are created with the help of sputtering of a layer of a mirror on bearing surfaces, in particular, on glass flasks, including in the form, roughly, pyramids. In this case for passage of airflow, utilizing thermal losses, through the internal environment of building blocks, in thermo-insulating lateral sides of the last apertures, and between the case bearing a mirror ray-reflecting layer are carried out, and sides of each building block create as small backlashes channels for washing by an air internal stream of a ray-reflecting layer. The airflow for utilizing thermal losses, from a surrounding atmosphere acts in similar variants of realization in the internal environment of building blocks on two parallel channels: through thinnesses between external a transparent thermo-insulating material and lateral thermo-insulating sides of the building block, on the one hand, and through in addition educated apertures on perimeter of the bottom helio-absorbent chamber with the attached regulators of the current volume of entering air, on the other hand. The special pumping out unit creates the directed air streams through the internal environment of all system of building blocks which, being summarized among themselves, create utilizing thermal losses airflow which further is used on this or that technological purpose.

Additional ray-reflecting surfaces, available away from helio-thermo-transforming chamber, in the multi-variant approach of realization have extremely high potential of increase of efficiency of helio-thermo-electric power stations. As an example of one of variants, it is necessary to note performance additional of ray-reflecting surfaces as rather easy rotary panels of the big length and the area, available in specially executed trenches which are closed by a transparent thermo-insulating material (a two-layer thin film) and carry out functions of hothouses, where on inclined (on 45°) earth surfaces and in part on the bottom of trenches vegetables and berries (a sunlight for these purposes in trenches it appears enough) are raised.

The offered way of a thermo-transformation of solar rays, according to the prospective invention, in one of variants of his realization, resulted on Figs 1-6 works, as follows.

Solar rays 17, direct and reflected from additional ray-reflecting surfaces 36, act in an inlet aperture of the external concentrator 35 of solar rays having the form, reminding truncated tetrahedral hollow pyramid. Their part acts through an internal cavity of the last directly in the built-in concentrators and conductors 18 of solar rays in structure of building blocks 16. Other part of solar rays 17 gets on ray-reflecting sides 37, 38, 39, converging among themselves to the contour reminding the smaller basis created in the pyramidal form, and is reflected from them, getting in him as in a inlet aperture of the external concentrator 35 of solar rays in structure of energetically condensed stream. This preliminary concentrated ray-stream acts through the built-in concentrators and conductors 18 of solar rays in an internal cavity of the ray-reflecting 1 as high-concentrated beam bunches through outlet apertures of the last with small cross-section (in comparison with inlet apertures of the built-in concentrator and a conductor of solar rays). The density of energy of the solar rays which are included in the helio-absorbent chamber 1, is those, that the temperature in the chamber can rise up to 500° and more. At such internal temperature there should be very high thermal losses which in known ways of use of a solar energy would exceed the energy brought by solar rays from the outside. Therefore the temperature in the internal environment in best of existing technical helio-thermo-transformers does not exceed 70-80°C. However, the built-in concentrator, in a considered variant, due to small cross-section of a outlet aperture, reduces also ray, and convective-conductive components of thermal losses to small or even to insignificant size in view of high thermo-insulating characteristics and the big thickness base, perceiving external power loading, a lightproof thermo insulating material in building blocks 16 of a helio-absorbent chamber 1. At the same time external concentrator 35 of solar rays consistently connected to it powerfully rate included in the helio-absorbent chamber 1 stream of solar rays, as if the powerful pump, in turn rating from a surrounding atmosphere, as from a source of the infinite capacity, the reflected solar rays from additional ray-reflecting surfaces 36. Cost of the last in the given variant of realization of a way is insignificant in comparison with cost of technological elements of accumulation and transformation of thermal energy, and they are placed in those volumes of surrounding space which are necessary for reception of required quantity of energy, including on any distances - within the limits of rectilinear communication between them and the center. Bunches of high-concentrated solar rays act in an internal cavity of helio-absorbent chamber 1 by means of internal light-outlets 25, 26 which expand these bunches, reducing their power density, capable to burn dark subjects, and direct them on a surface of a high-temperature helio-thermo-transforming material 6 and water surrounding it 7. Though a material 6, having temperature more than 150° and even it is significant big, it is located in well thermo insulating capacities 8, but heat-loses from them are rather significant. However, they are utilized in the majority in rise in temperature of water 7, and also air. Hot water moves in power channels 11 for formation steam as working-medium, with its partial returning in a circular cycle and completion of its volume from the outside. In parallel with it in power channels 11 under pressure heated up air from internal helio-absorbent environment of the chamber 1 due to that the most favourable modes of steam formation are formed economically moves and the steam-air mix as a working-medium is created at reception of electric energy in steam-turbo-electric units, wind-turbo-electric units and at a heat supply of other consumers (15). The steam-air mix moves for energy-transformations in channels 12, 13 through a regulator of given capacity 14.

At the same time, the pumping down of the heated up air from internal helio-absorbent environment of the chamber 1 creates in it underpressure under which influence through the air cavities 23 formed between assembly modules 22, and along external surfaces of cases 19 of built-in concentrators 18 the unidirectional air stream from a surrounding atmosphere inside which utilizes all kinds of heat loses is caused, raising simultaneously reliability of functioning of all design due to stabilization of its temperature. If the temperature of the internal environment and the case as a whole helio-absorbent chamber 1 grows concerning set modes, increase feedback of useful thermal capacity through a regulator 14 and when it is impossible on any circumstances, - the safety system of energy channels and devices (29, 30, 31, 32, 33, 34) comes into effect.

With the purpose of additional decreasing of heat-loses from the high-temperature technological material 6 which are taking place mainly in a fused emissivity condition, it is covered in capacities with 8 dark, deeply goffered sheet material 10, for example, a steel sheet. It goffers or additional internal heat-conducting paths transfer thermal energy to the fused technological material 6, sharply limiting radiation of heat-loses, and through him and thermo insulating capacity 8 - to water, with subsequent use of this thermal energy.

Despite of use of the specified technological schemes of recycling of thermal losses, the case of helio-absorbent chamber has the raised temperature concerning an environment due to that nevertheless there is a heat transfer to air. Therefore the offered way provides also an external contour of recycling of thermal losses by use of heated up air. The scheme of such use is based that the external concentrator 35 of solar rays 17, having the approached pyramidal form, reminds also known wind-concentrating convergent tubes, having thus the significant spatial sizes. Therefore in a considered way the external concentrator 35 of solar rays 17 apply and as the concentrator of natural windflow 40. Besides the inclined surface of the bottom 2 of helio-absorbent chamber 1 through the heat-loses creates also an artificial wind from an environment aside the technological space 61 covering an axis 60 as axial geometrical center of an external surface of the chamber 1, including in the closed toroidal form. To creation of an artificial wind from different directions from periphery to the center promote the ray-reflecting concentrators of a wind located on a circle.

Hence, natural and artificial windflows 40 flows an external surface of helio-absorbent chambers 1 and internal surfaces of the external concentrator 35 of solar rays 17 which are heated up with reflected solar rays, taking away formed heat outside of the chamber, and goes to technological ring space 61 where it is used further thermodynamic and aero-baric processes of energy transforming (their principles and schemes in this case are not considered).

As a result of realization of a way, according to the prospective invention, with application of consecutive connection of concentrators of solar rays and additional ray-reflecting surfaces it is made purposeful rating of solar rays in the helio-absorbent chamber, thus the opportunity of realization especially effective thermo insulation of helio-absorbent chamber is created, multilevel recycling of thermal losses by means of what the main disputed situation in helio-thermo-transformations is authorized is provided, are reduced or even limits of restriction of thermal losses and escalatings of capacity of power transformations in the helio-absorbent installations covered with a lightproof thermo insulating material are eliminated. It allows to create powerful helio-thermo-transforming complexes which specific cost does not exceed its achieved level in traditional industrial both household boiler-houses and the thermal power station, working on the basis of burning power raw material, and lays a way to ecological and technical - economic transformation of all power.

The offered way of thermo transformation of a solar energy, in case of realization of item 31 of the patent claims of the prospective invention, gives large ecological and technical - economic benefit, and his efficiency grows in addition at realization of all or several items of the patent claims.

### Brief description of drawings

On Figs 1 one of variants of realization of a way of thermo transformation of a solar energy is resulted.

On Figs 2 the scheme of configuration of helio-absorbent chamber in the volumetric form of execution is resulted.

On Figs 3 accommodation of the built-in concentrators and conductors of solar rays is shown.

On Figs 4 the variant of configuration of the building block from assembly modules is given.

On Figs 5 the scheme of realization of a way with application of toroidal helio-absorbent chamber is resulted in the plan.

On Figs 6 the fragment of vertical section of toroidal helio-absorbent chamber in section - is resulted.

## Claims

1. The way of thermo-transformation of a solar energy, based on increasing of thermo-insulating characteristics and simultaneously a light-conductivity of surfaces of closed helio-absorbent chamber where carry out transformation of energy of solar rays to thermal energy for what last limit from different directions by thermo-insulating material, in particular opaque, as the thermo-insulating bottoms, walls and a ceiling, and a walls and-or ceiling of helio-absorbent chambers supply with light-conductivity thermo-insulating sites, executed, mainly, as strips extended in length so that were provided as restriction of thermal losses, including their ray components, and receipt in it of such quantity of solar rays which would allow to receive a heat during the solar periods in chamber's helio-absorbent materials and environments, in particular, in separate variants of realization not less than 150 degrees of Celsius, Application in helio-absorbent chamber of technological materials with raised ray-absorbent characteristics, specific thermal capacities and thermo-accumulating properties and accumulation of thermal energy in technological materials of helio-absorbent chamber and-or thermo accumulating constructions connected to it by heat-transmitting channels, for the long period determined by technical requirements of consumers of the energy and static characteristics of weather and seasonal conditions, distinguished by that separate internal helio-absorbent environment of the chamber from an external environment on the part of its internal surfaces, mainly, a transparent thermo-insulating material, thickness and thermo-insulating which characteristics define only on conditions of the set minimization of resulting thermal losses from helio-absorbent chamber, while solar rays from surrounding space by the aim way direct on helio-thermo-transforming materials of helio-absorbent chamber, at least, through two consistently located concentrators and a conductors of solar rays, first of which carry out as the external concentrator of solar rays with the help of ray-reflecting surfaces, available in surrounding space of helio-absorbent chamber so that the solar rays reflected by them acted on irradiated sites of last for what specified ray-reflecting surfaces carry out as truncated hollow tetrahedral pyramid which sides supply with a ray reflecting material and create by means of them peripheral borders of its smaller basis adjoining to an external surface of the helio-absorbent chamber and being a outlet aperture of the external concentrator of solar rays, and the greater basis which are carrying out function of his inlet aperture, which have towards to the direct and reflected solar rays taking place through him from surrounding space and acting, with the help of ray-reflecting surfaces of his sides, the concentrated stream on corresponding sites of surfaces of helio-absorbent chamber, and the area of an inlet aperture of the external concentrator of solar rays exceeds the area of his outlet aperture, and as the second apply the built-in concentrator and a conductor of solar rays which form by means of creation of system built-in on all thickness of a thermo-insulating material covering the helio-absorbent chamber, volumetric geometrical forms, for example as the hollow truncated tetrahedral pyramids extended mainly at length, and-or cones which lateral surfaces carry out also in ray-reflecting form, and the free bases close by a thin transparent thermo-insulating material, due to what given geometrical forms, containing the certain volume of the gas thermo-insulating environment, allow to keep high thermo-insulating parameters of helio-absorbent chamber and simultaneously to give to it high solar-ray and thermal energy-saturation, thus the external concentrator of solar rays supply with the additional ray-reflecting surfaces placed on various distances in an environment in fixed and-or adjustable depending on time and weather conditions positions concerning a surface of the earth with which help direct streams of the reflected solar rays in a direction, at least, parts of inlet apertures of external concentrators of solar rays, thus on external surfaces of a transparent thermo-insulating material covering helio-absorbent chamber, place the big bases on the area of the built-in concentrators and conductors of solar rays, geometrical parameters and which relative positioning choose thus, what is the parties of their adjacent bases adjoin to each other on the minimal distances determined by technological conditions of realization and stability of a design in operation while by means of an internal surface lightproof of a thermo-insulating material the smaller bases of the built-in concentrators and conductors of solar rays have, the area of each of which is less than area of the external basis and defines sections of the concentrated streams of solar rays, transforming in it in thermal energy, and between the nearby parties of the smaller bases form distances due to which in addition reduce thermal losses of helio-absorbent chamber.

2. A way of thermo-transformation of a solar energy as claimed in claim 1 **characterized in that** hollow volumetric geometrical forms as components of the built-in concentrators and conductors of solar rays, carry out from metal and-or a glass, plastic, a tree, the pressed and composit materials supplied with ray-reflecting surfaces, in particular, formed with the help of sputtering.

3. A way of thermo-transformation of a solar energy as claimed in claim 1 **characterized in that** carry out the external concentrator of solar rays rotary concerning an axis of the helio-absorbent chamber executed in many-sided prismatic and-or the toroidal form for what his sides fix concerning base by means of bearing of rotation.

4. A way of thermo-transformation of a solar energy as claimed in claim 1 **characterized in that** the helio-absorbent chamber connect by means of the fluid environment with thermo-insulated volume of a thermo accumulating material, placed in a body of the Earth, in particular, in earth and water layers, including under the helio-absorbent chamber, and-or on a surface of the Earth in nearby surrounding space.
